# EUROPEAN PATENT APPLICATION

(11) **EP 4 723 268 A1**
(43) Date of publication of application: **08.04.2026**
(21) Application number: 25207059.4
(22) Date of filing: 06.10.2025
(51) Int. Cl.: H01M 10/04, H01M 50/107, H01M 50/148, H01M 50/152, H01M 50/342

(54) **BATTERY CELL, BATTERY CELL MANUFACTURING DEVICE AND BATTERY CELL MANUFACTURING METHOD**

(30) Priority: 07.10.2024 KR 20240135852; 25.08.2025 KR 20250118507
(71) Applicant: SK On Co., Ltd., Seoul 03161 (KR)
(72) Inventor: CHOI, Yang Kyu, Daejeon 34124 (KR); KWAK, Seung Ho, Daejeon 34124 (KR); PAK, Byeong Jun, Daejeon 34124 (KR); PARK, Seong Che, Daejeon 34124 (KR); LEE, Dong Hyee, Daejeon 34124 (KR); CHEONG, Hoemin, Daejeon 34124 (KR); JU, Seung Hoon, Daejeon 34124 (KR)
(74) Representative: Stolmár & Partner Patentanwälte PartG mbB

(57) **Abstract**

A device for manufacturing a battery cell is provided. The device includes a first pressing device including a first mold portion configured to press one side of a base material, and a second mold portion including a first protrusion configured to press the other side of the base material and configured to support the base material; and a second pressing device including a third mold portion including a second protrusion configured to press the one side of the base material, and a fourth mold portion including a third protrusion configured to press the other side of the base material, and configured to support the base material, wherein a first width of the first protrusion is greater than a third width of the third protrusion.

## Description

### TECHNICAL FIELD

The disclosure and implementations disclosed in this patent document generally relate to a battery cell, a device for manufacturing the battery cell, and a method for manufacturing the battery cell.

### BACKGROUND

Unlike a primary battery, a secondary battery may be charged with and discharged of electricity, and thus may be applied to various fields such as a digital camera, a mobile phone, a notebook computer, a hybrid vehicle, an electric vehicle, and an energy storage system (ESS). The secondary battery may be a lithium-ion battery, a nickel-cadmium battery, a nickel-metal hydride battery, or a nickel-hydrogen battery.

The secondary battery may be manufactured as a flexible pouch-type battery cell or a prismatic or cylindrical can-type battery cell having rigidity. A plurality of battery cells may be disposed in a module housing to form a battery module.

### SUMMARY

A battery cell may include an electrode assembly, a can, and a cap plate. At least one of the can or the cap plate may include a venting portion. The venting portion may form a path for rupturing when a pressure in the battery cell is equal to or greater than a specified level to discharge gas, flames, and/or conductive particles in the battery cell to an outside of the battery cell. When a thickness of the venting portion is not formed uniformly, the battery cell may be broken at an unintended pressure.

According to an aspect of the present disclosure, provided may be a battery cell including a venting portion having a uniform thickness, a device for manufacturing the battery cell capable of forming the venting portion having the uniform thickness, and a method for manufacturing the battery cell.

A battery cell, a device for manufacturing the battery cell, and a method for manufacturing the battery cell, of the present disclosure, may be widely applied to green technology fields such as electric vehicles, battery charging stations, photovoltaic power generation, wind power generation, or the like using other batteries. In addition, a battery cell, a device for manufacturing the battery cell, and a method for manufacturing the battery cell, of the present disclosure, may be used in eco-friendly electric vehicles, hybrid vehicles, or the like to prevent climate change by suppressing air pollution and greenhouse gas emissions.

A device for manufacturing a battery cell of the present disclosure includes a first mold portion configured to press one side of the base material, a first pressing device including a second mold portion configured to press the other side of the base material, a third mold portion configured to press one side of the base material, a third protrusion configured to press the other side of the base material, and a second pressing device including a fourth mold portion configured to support the base material. The first width of the first protrusion may be greater than the third width of the third protrusion.

According to an embodiment, a second width of the second protrusion may be equal to or less than the third width of the third protrusion.

According to an embodiment, the device may further include a stopper member located between the third mold portion and the fourth mold portion and configured to separate the third mold portion and the fourth mold portion.

According to an embodiment, a second height of the second protrusion may be within 50% of a thickness of the base material.

According to an embodiment, a second height of the second protrusion may be higher than a first height of the first protrusion or a third height of the third protrusion.

A method for manufacturing a battery cell of the present disclosure includes a first pressing process of forming a first notching on the other side of a base material by using a first mold portion pressing one side of the base material and a second mold portion including a first protrusion pressing the other side of the base material and supporting the base material; and a second pressing process of forming a second notching on the one side of the base material by using a third mold portion including a second protrusion pressing the one side of the base material, and a fourth mold portion including a third protrusion pressing the other side of the base material, wherein a first width of the first protrusion is greater than a third width of the third protrusion.

According to an embodiment, a second width of the second protrusion may be equal to or less than the third width of the third protrusion.

According to an embodiment, a second height of the second protrusion may be higher than a first height of the first protrusion or a third height of the third protrusion.

According to an embodiment, the first pressing process may form the first notching by relatively reciprocating the second mold portion with regard to the first mold portion and the base material.

According to an embodiment, the second pressing process may dispose the third protrusion to face the first notching, and the second pressing process may form the second notching by relatively reciprocating the second protrusion with regard to the fourth mold portion and the base material.

A battery cell of the present disclosure includes an electrode assembly; a can in which the electrode assembly is accommodated; and a cap plate sealing an opening of the can and including a first venting portion formed to be ruptured when a pressure in the can is equal to or greater than a preset value, wherein the cap plate includes a first surface, and a second surface opposite to the first surface, the first venting portion is located between a first notching formed in the first surface and a second notching formed in the second surface, and a maximum width of the first notching is different from a maximum width of the second notching.

According to an embodiment, a height of the first notching may be equal to or less than a height of the second notching.

According to an embodiment, the second notching may have a groove including a cross-section of any one of a V shape, a tetragonal shape, a U shape, or a semicircular shape.

According to an embodiment, a central axis of the first notching may be offset from a central axis of the second notching.

According to an embodiment, at least one of the first notching or the second notching may be a groove including a cross-section of an asymmetric structure.

According to an embodiment, at least one of the first notching or the second notching may include a coating layer on an inner surface thereof.

According to an embodiment, the cap plate may include a plurality of first venting portions, and the plurality of first venting portions are formed to be spaced apart from each other.

According to an embodiment, the can may include a bottom portion including a second venting portion formed to be rupturable when the pressure in the can is equal to or greater than the present value, and a wall portion extended from the bottom portion, the bottom portion may include a third surface and a fourth surface opposite to the third surface, and the second venting portion may be located between a third notching formed in the third surface and a fourth notching formed in the fourth surface.

According to an embodiment, a width of the third notching may be different from a width of the fourth notching.

According to an embodiment, a height of the third notching may be equal to or less than a height of the fourth notching.

### BRIEF DESCRIPTION OF DRAWINGS

Certain aspects, features, and advantages of the present disclosure may be illustrated by the following detailed description with reference to the accompanying drawings.
FIG. 1 is a perspective view of a battery cell according to an embodiment.
FIG. 2 is an exploded perspective view of a battery cell according to an embodiment.
FIG. 3 is a perspective view of a cap plate of a battery cell according to an embodiment.
FIG. 4 is a perspective view of a cap plate of a battery cell according to another embodiment.
FIG. 5 is a cross-sectional view taken along line I-I' of FIG. 3 according to an embodiment.
FIGS. 6 to 10 are cross-sectional views taken along line I-I' of FIG. 3 according to various modifications.
FIG. 11 is a cross-sectional view taken along line II-II' of FIG. 1, according to an embodiment.
FIG. 12 is a perspective view of a device for manufacturing a battery cell according to an embodiment.
FIG. 13 is a flowchart of a method for manufacturing a battery cell according to an embodiment.
FIG. 14 is a schematic view of a first pressing process according to an embodiment.
FIG. 15 is a schematic view of a second pressing process according to an embodiment.
FIG. 16 is a schematic view of a second pressing process of a device for manufacturing a battery cell including a stopper member according to an embodiment.

### DETAILED DESCRIPTION

Hereinafter, the present disclosure will be described in detail with reference to the accompanying drawings. However, this is illustrative only and the present disclosure is not limited to the specific embodiments illustrated exemplarily.

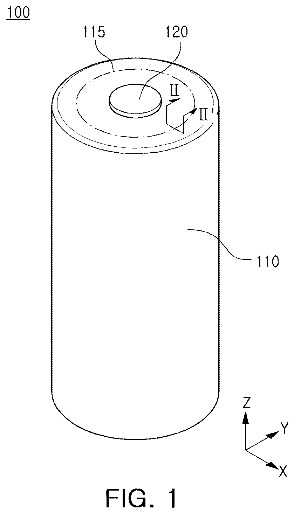

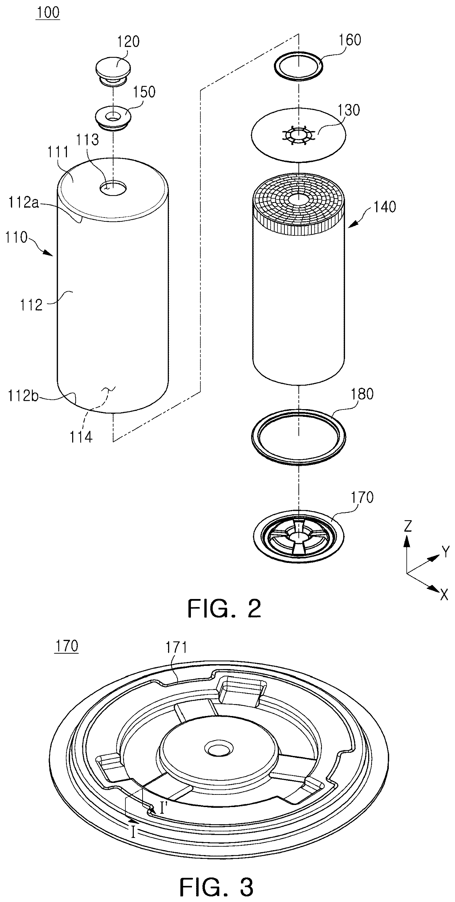

FIG. 1 is a perspective view of a battery cell according to an embodiment. FIG. 2 is an exploded perspective view of a battery cell according to an embodiment.

Referring to FIGS. 1 and 2, a battery cell 100 may include a can 110, a terminal portion 120, a current collector plate 130, and an electrode assembly 140.

The battery cell 100 may be a secondary battery. For example, the battery cell 100 may be a lithium ion battery, but is not limited thereto. For example, the battery cell 100 may be a nickel-cadmium battery, a nickel-metal hydride battery, or a nickel-hydrogen battery, capable of charging and discharging electricity. In an example, the battery cell 100 may be a tabless battery cell.

The can 110 may form at least a portion of an exterior of the battery cell 100. In an embodiment, the can 110 may include a bottom portion 111 and a wall portion 112 extending from the bottom portion 111. The bottom portion 111 may accommodate the terminal portion 120. For example, the bottom portion 111 may include a through-hole 113 accommodating the terminal portion 120. The can 110 may provide an inner space for accommodating components (e.g., the electrode assembly 140 and an electrolyte) of the battery cell 100. The can 110 may have a substantially cylindrical outer shape. In an embodiment, the bottom portion 111 may be electrically connected to an outside of the battery cell 100. The wall portion 112 may include a first end region 112a connected to the bottom portion 111, and a second end region 112b opposite the first end region 112a and forming an opening 114. The opening 114 may be an empty space formed in the can 110. In an embodiment, the can 110 may be referred to as a case.

In an embodiment, the bottom portion 111 of the can 110 may include a second venting portion 115. The second venting portion 115 may be a groove, a recess, or a notching formed in the bottom portion 111. For example, the second venting portion 115 may be a portion of the bottom portion 111 having a relatively thinner thickness than other portions of the bottom portion 111. When a pressure in the can 110 is equal to or greater than a preset value, the second venting portion 115 may be formed to be ruptured. In a state in which a thermal event occurs, gas, flames, and/or conductive particles in the battery cell 100 may be discharged to the outside of the battery cell 100 through the second venting portion 115.

The terminal portion 120 may provide a path for transferring a current to the outside of the battery cell 100. The terminal portion 120 may be electrically connected to the electrode assembly 140. For example, the terminal portion 120 may be welded to the current collector plate 130 connected to the electrode assembly 140. The terminal portion 120 may be bonded to an external structure (e.g., a busbar) of the battery cell 100.

The terminal portion 120 may be mounted on the can 110. In an embodiment, the terminal portion 120 may be a rivet terminal. The terminal portion 120 may be coupled to the bottom portion 111 of the can 110 by riveting. The terminal portion 120 may be inserted into the through-hole 113 of the can 110.

The current collector plate 130 may electrically connect the electrode assembly 140 to the terminal portion 120. The current collector plate 130 may be bonded to the terminal portion 120 and an uncoated portion of the electrode assembly 140. The current collector plate 130 may be formed of a conductive material.

The electrode assembly 140 may be disposed in the can 110. The electrode assembly 140 may include a first electrode plate (e.g., a positive electrode plate), a second electrode plate (e.g., a negative electrode plate), and at least one separator. The separator may prevent contact between the positive electrode plate and the negative electrode plate. It will be understood by those skilled in the art that the electrode assembly 140 may be manufactured using various methods. According to embodiments, the positive electrode plate, the negative electrode plate, and the separator may be repeatedly disposed to form an electrode assembly. In some embodiments, the electrode assembly may be a winding type, a stacking type, a zigzag folding type, and a stack-fold type. In an embodiment, an uncoated portion of the first electrode plate may be bonded to the current collector plate 130 disposed on one side of the electrode assembly 140, and an uncoated portion of the second electrode plate may be bonded to a current collector plate (not illustrated) disposed on the other side of the electrode assembly 140.

The battery cell 100 may include a sealing gasket 150. The sealing gasket 150 may seal a gap between the terminal portion 120 and the can 110. At least a portion of the sealing gasket 150 may be located between the terminal portion 120 and the can 110 (e.g., the bottom portion 111). The sealing gasket 150 may surround at least a portion of the terminal portion 120. Leakage of an electrolyte into the battery cell 100 may be prevented by the sealing gasket 150. The inflow of foreign substances into the battery cell 100 may be prevented by the sealing gasket 150. In an embodiment, the sealing gasket 150 may be referred to as a first sealing member or a first gasket.

The battery cell 100 may include an insulator 160. The insulator 160 may prevent unintended electrical contact between components of the battery cell 100. For example, the insulator 160 may prevent contact between the current collector plate 130 and the can 110. The insulator 160 may surround at least a portion of the terminal portion 120. At least a portion of the insulator 160 may be located between the can 110 (e.g., the bottom portion 111) and the electrode assembly 140. The insulator 160 may be formed of an insulating material.

The battery cell 100 may include a cap plate 170. The cap plate 170 may form at least a portion of the exterior of the battery cell 100. The cap plate 170 may seal the opening 114. In an embodiment, the cap plate 170 may provide an inner space accommodating components of the battery cell 100, together with the can 110. The cap plate 170 may be coupled (e.g., welded or crimped) to the wall portion 112 of the can 110. In an embodiment, after the cap plate 170 is welded to the wall portion 112, a portion of the can 110 may be beaded. In an embodiment, the cap plate 170 may support the electrode assembly 140.

A beading gasket 180 may seal a gap between the cap plate 170 and the can 110. The beading gasket 180 may have a substantially closed curve shape. By the beading gasket 180, leakage of the electrolyte into the battery cell 100 may be prevented. By the beading gasket 180, inflow of foreign substances into the outside of the battery cell 100 may be prevented. In an embodiment, the beading gasket 180 may be referred to as a second sealing member or a second gasket.

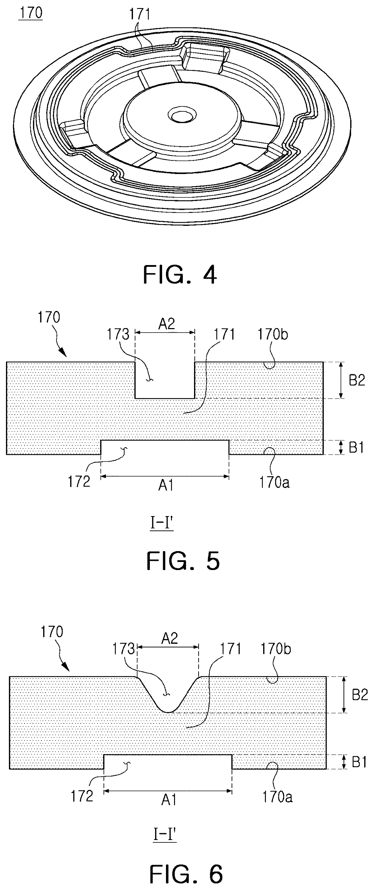

FIG. 3 is a perspective view of a cap plate 170 of a battery cell according to an embodiment. FIG. 4 is a perspective view of a cap plate 170 of a battery cell according to another embodiment. FIG. 5 is a cross-sectional view taken along line I-I' of FIG. 3 according to an embodiment. FIGS. 6 to 10 are cross-sectional views taken along line I-I' of FIG. 3 according to various modifications.

Referring to FIGS. 3 to 10, a cap plate 170 may include a first venting portion 171. The description of the cap plate 170 of FIG. 2 may be applied to the cap plate 170 of FIGS. 3 to 10.

The cap plate 170 may include a first surface 170a and a second surface 170b opposite the first surface 170a. The second surface 170b may face an inside of a battery cell (e.g., the battery cell 100 of FIG. 1). For example, the second surface 170b may face an electrode assembly 140. The first surface 170a may face an outside of the battery cell 100. Alternatively, contents opposite thereto may be established. For example, the first surface 170a may face an inside of the battery cell 100 of FIG. 1, and the second surface 170b may face an outside of the battery cell 100 of FIG. 1.

The first venting portion 171 may be a groove, a recess, or a notching formed in the cap plate 170. For example, the first venting portion 171 may be a portion of the cap plate 170 having a relatively thinner thickness than other portions of the cap plate 170. When a pressure in the can 110 is equal to or greater than a preset value, the first venting portion 171 may be formed to be ruptured. In a state in which a thermal event occurs, gas, flames, and/or conductive particles in the battery cell 100 may be discharged to the outside of the battery cell 100 through the first venting portion 171. The cap plate 170 may include a first notching 172 formed on the first surface 170a, and a second notching 173 formed on the second surface 170b. The first venting portion 171 may be a portion of the cap plate 170 located between the first notching 172 and the second notching 173.

Referring to FIG. 4, the cap plate 170 may include a plurality of first venting portions 171, and the plurality of first venting portions 171 may be formed to be spaced apart from each other. The plurality of first venting portions 171 may be continuously disposed along an outer circumference of the cap plate 170. When the plurality of first venting portions 171 are formed, gas, flames, and/or conductive particles in the battery cell 100 may be more smoothly emitted.

A maximum width A1 of the first notching 172 may have a value different from a maximum width A2 of the second notching 173. Therefore, productivity may be improved in forming the first venting portion 171 having a uniform thickness.

A height B1 of the first notching 172 may be equal to or less than a height B2 of the second notching 173.

A shape of the cap plate 170 may be selectively designed. In an embodiment (e.g., FIG. 5), the first notching 172 and the second notching 173 may be grooves including a cross-section of a substantially rectangular shape.

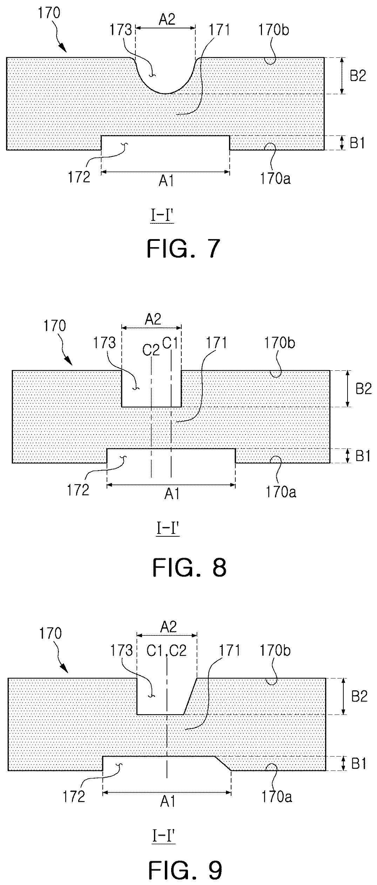

The first notching 172 or the second notching 173 may be a groove including cross-sections of various polygons. For example, the second notching 173 may be a groove including a cross-section of any one of a V shape, a tetragonal shape, a U shape, or a semicircular shape. In an embodiment (e.g., FIG. 6), the first notching 172 may be a groove including a cross-section of a substantially rectangular shape, and the second notching 173 may be a groove including a cross-section of a substantially V-shaped shape. In another embodiment (e.g., FIG. 7), the second notching 173 may be a groove including a cross-section of a substantially semicircular shape. As such, the second notching 173 may include various cross-sections.

Referring to FIG. 8, a central axis C1 of the first notching 172 may be formed to not be offset from a central axis C2 of the second notching 173. The central axis C1 of the first notching 172 may mean a line passing through a center of the maximum width A1 of the first notching 172. The central axis C2 of the second notching 173 may mean a line passing through a center of the maximum width A2 of the second notching 173. For example, when the first notching 172 has an inclined cross-section, the central axis C1 of the first notching 172 may be determined based on the maximum width A1 of the first notching 172. Also, when the second notching 173 has an inclined cross-section, the central axis C2 of the second notching 173 may be determined based on the maximum width A2 of the second notching 173 (see FIG. 9).

Since the first notching 172 and the second notching 173 may be formed through separate processes, positions at which the first notching 172 and the second notching 173 are disposed on the cap plate 170 may not affect each other and may be variously disposed. Therefore, the central axis C1 of the first notching 172 and the central axis C2 of the second notching 173 may be formed not to coincide with each other. The central axis C1 of the first notching 172 and the central axis C2 of the second notching 173 may not be necessarily formed not to coincide with each other, and referring to FIG. 9, the central axis C1 of the first notching 172 and the central axis C2 of the second notching 173 may be formed to coincide with each other. The first notching 172 and the second notching 173 may include cross-sections having various structures. For example, referring to FIG. 9, at least one of the first notching 172 or the second notching 173 may be a groove including a cross-section of an asymmetric structure. According to an embodiment, the first notching 172 may include a cross-section having one side being an inclined surface and the other side having a vertical surface. Also, the second notching 173 may include a cross-section having one side being an inclined surface and the other side having a vertical surface. For example, the first notching 172 or the second notching 173 are not necessarily required to have a symmetrical structure, and may include an asymmetric structure. However, the present disclosure is not limited thereto, and the first notching 172 and the second notching 173 may have various shapes.

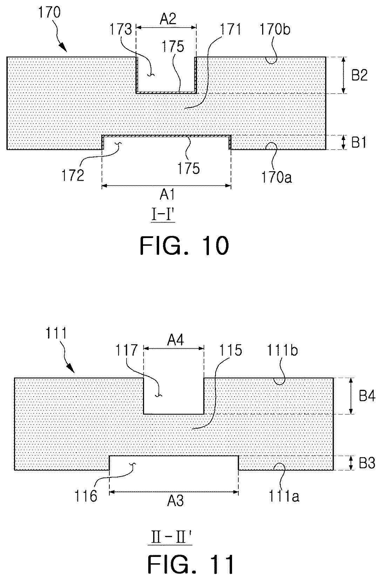

Referring to FIG. 10, at least one of the first notching 172 or the second notching 173 may include a coating layer 175 on an inner side surface thereof. The coating layer 175 may be a material including at least one of a resin, metal, or an oxide. For example, the coating layer 175 may include a nickel coating layer. When the coating layer 175 is formed on the inner side surface of the first notching 172 or the second notching 173, a surface of the first venting portion 171 exposed during a notching process may be prevented from being in direct contact with external environment or an electrolyte therein, thereby preventing corrosion of the first venting portion 171 and securing long-term durability and reliability.

FIG. 11 is a cross-sectional view taken along line II-II' of FIG. 1, according to an embodiment. In an embodiment, at least portion of the description with respect to a cap plate 170 and a first venting portion 171 may be applied to a bottom portion 111 and a second venting portion 115 of FIG. 11. For example, the bottom portion 111 of FIG. 11 may include a plurality of notches, and the second venting portion 115 may be a portion of the bottom portion 111 located between the plurality of notches.

The bottom portion 111 of a can 110 may include a third surface 111a and a fourth surface 111b opposite to the third surface 111a. The fourth surface 111b may face an inside of the battery cell 100. For example, the fourth surface 111b may face the electrode assembly 140. The third surface 111a may face an outside of the electrode assembly 140. Alternatively, contents opposite thereto may be established. For example, the third surface 111a may face the electrode assembly 140, and the fourth surface 111b may face an outside of the electrode assembly.

The second venting portion 115 may be a groove, a recess, or a notching formed in the bottom portion 111. For example, the second venting portion 115 may be a portion of the bottom portion 111 having a relatively thinner thickness than other portions of the bottom portion 111. When a pressure in the can 110 is equal to or greater than a preset value, the second venting portion 115 may be formed to be ruptured. In a state in which a thermal event occurs, gas, flames, and/or conductive particles in the battery cell 100 may be discharged to the outside of the battery cell 100 through the second venting portion 115. The bottom portion 111 may include a third notching 116 formed in the third surface 111a, and a fourth notching 117 formed in the fourth surface 111b. The second venting portion 115 may be a portion of the bottom portion 111 located between the third notching 116 and the fourth notching 117.

A width A3 of the third notching 116 may have a value different from a width A4 of the fourth notching 117. Therefore, productivity may be improved in forming the second venting portion 115 having a uniform thickness.

A height B3 of the third notching 116 may be equal to or less than a height B4 of the fourth notching 117.

A shape of the bottom portion 111 may be selectively designed. In an embodiment (e.g., FIG. 11), the third notching 116 and the fourth notching 117 may be grooves including a cross-section of a substantially rectangular shape. A shape of the notching is not limited. For example, as another embodiment, the third notching 116 may be a groove including a tetragonal cross-section, and the fourth notching 117 may be a groove including a cross-section of any one of a V shape, a tetragonal shape, a U shape, or a semicircular shape.

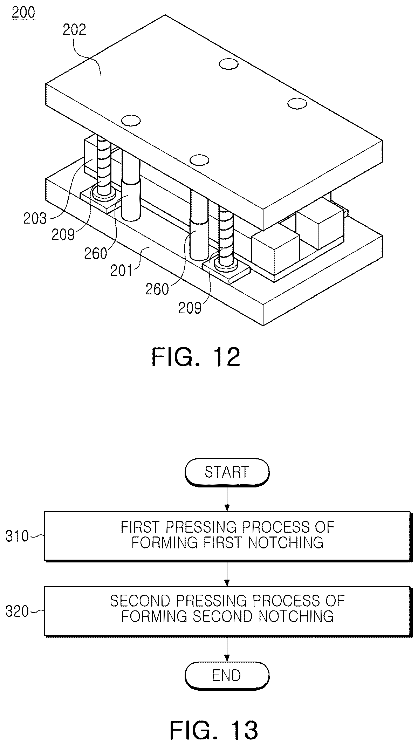

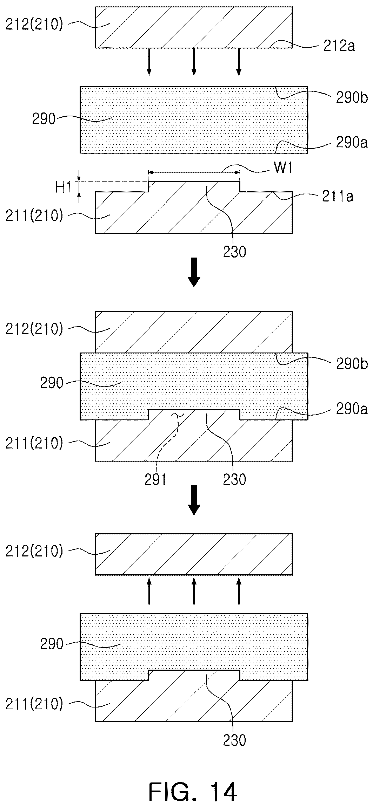

The cap plate 170 and/or the can 110 of FIG. 2 may be manufactured by changing a base material (for example, a base material 290 of FIG. 14). For example, the bottom portion 111 and the cap plate 170 may be manufactured by changing the base material 290 by a device for manufacturing a battery cell 200 of FIG. 12. The cap plate 170 may be manufactured by a method 300 for manufacturing a battery cell of FIG. 13. The base material 290 may be a metal.

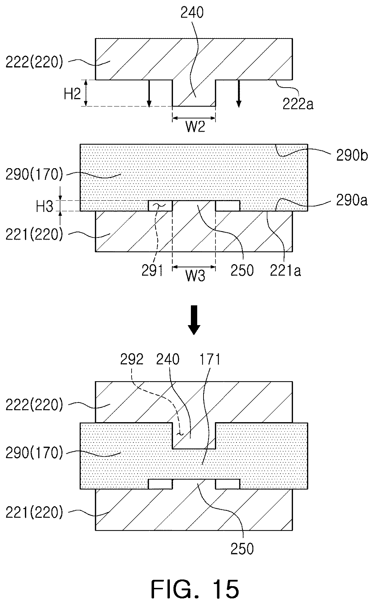

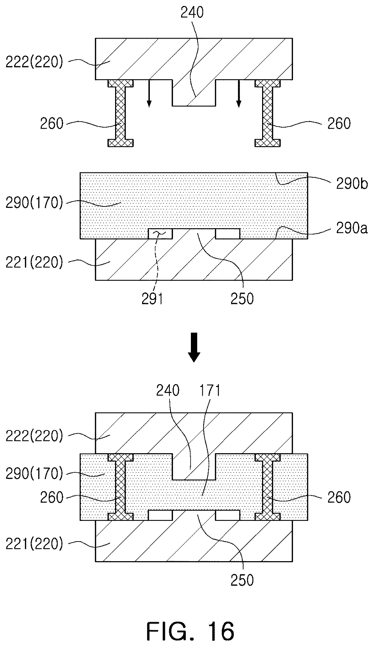

FIG. 12 is a perspective view of a device for manufacturing a battery cell according to an embodiment. FIG. 13 is a flowchart of a method for manufacturing a battery cell according to an embodiment. FIG. 14 is a schematic view of a first pressing process according to an embodiment. FIG. 15 is a schematic view of a second pressing process according to an embodiment. FIG. 16 is a schematic view of a second pressing process of a device for manufacturing a battery cell including a stopper member according to an embodiment.

Referring to FIGS. 12 to 16, a device 200 for manufacturing a battery cell may include a first pressing device 210 and a second pressing device 220. A method 300 for manufacturing a battery cell may include a first pressing process 310 and a second pressing process 320.

The device 200 for manufacturing the battery cell and the method 300 for manufacturing the battery cell may be used to manufacture a battery cell 100. For example, the device 200 for manufacturing the battery cell and the method 300 for manufacturing the battery cell may manufacture the can 110 or the cap plate 170 of FIG. 2. In an embodiment, the device 200 for manufacturing the battery cell and the method 300 for manufacturing the battery cell may manufacture a can (e.g., the can 110 of FIG. 1) in which a venting portion (e.g., the second venting portion 115 of FIG. 1) may be formed. In an embodiment, the device 200 for manufacturing the battery cell and the method 300 for manufacturing the battery cell may manufacture a cap plate (e.g., the cap plate 170 of FIG. 3) in which a venting portion (e.g., the first venting portion 171 of FIG. 3) is formed.

The pressing device (210, 220) may provide a pressure to a base material 290 to deform a shape of the base material 290. For example, the pressing device (210, 220) may include a lower mold portion 201 and an upper mold portion 202. In an embodiment, the lower mold portion 201 may support the base material 290, and the upper mold portion 202 may move relative to the lower mold portion 201 and the base material 290. For example, the upper mold portion 202 may be movably connected to the lower mold portion 201 through a driving guide 209. Each of the pressing devices (210, 220) may include a protrusion 203. The protrusion 203 may provide a pressure to the base material 290 to deform the shape of the base material 290. For example, the base material 290 may be deformed to correspond to a shape of the protrusion 203.

The pressing device (210, 220) may be provided as a plurality of pressing devices (210, 220). For example, the pressing device (210, 220) may include a first pressing device 210 and a second pressing device 220. The first pressing device 210 and the second pressing device 220 may be sequentially operated. For example, after the shape of the base material 290 may be primarily deformed by the first pressing device 210, the second pressing device 220 may deform the shape of the base material 290.

As the first pressing device 210 and the second pressing device 220 are sequentially operated, unintended deformation of the base material 290 may be prevented. As the first pressing device 210 and the second pressing device 220 are sequentially operated, a first venting portion 171 having a substantially uniform thickness may be formed regardless of a thickness of the base material 290. For example, the first pressing device 210 and the second pressing device 220 may form a first notching (e.g., the first notching 172 of FIG. 5) and a second notching (e.g., the second notching 173 of FIG. 5), having uniform sizes, respectively.

According to an embodiment (e.g., FIG. 14), the first pressing device 210 may perform a first pressing process 310. The first pressing device 210 may include a first mold portion 212 and a second mold portion 211. The first mold portion 212 may press one side of the base material 290. The second mold portion 211 may press the other side of the base material 290. The second mold portion 211 may include a first protrusion 230 configured to press the other side of the base material 290. The second mold portion 211 may support the base material 290. In a state in which the second mold portion 211 supports one side of the base material 290, the first mold portion 212 may provide pressure to the other side of the base material 290. For example, the second mold portion 211 may include a second pressing surface 211a facing a lower surface 290a of the base material 290, and the first mold portion 212 may include a first pressing surface 212a facing an upper surface 290b of the base material 290. The second mold portion 211 may include the first protruding portion 230 protruding from the second pressing surface 211a. The first pressing device 210 may form a notching 291 corresponding to a shape of the first protruding portion 230 on the base material 290. The first mold portion 212 supporting the base material 290 may include the first protruding portion 230, and the second mold portion 211 moving relative to the first mold portion 212 may not include a protruding portion. Since a lower notching (e.g., notching 291) may be formed in the first mold portion 212, floating of the base material 290 may be prevented and manufacturing difficulty may be reduced. In an embodiment, the first mold portion 212 may be referred to as a first upper mold portion, and the second mold portion 211 may be referred to as a first lower mold portion. Descriptions of the lower mold portion 201 and the upper mold portion 202 may be applied to the second mold portion 211 and the first mold portion 212, respectively.

The first pressing process 310 may form the notching 291 (e.g., the first notching 172 of FIG. 5) on the base material 290 using the first pressing device 210. For example, the first pressing process 310 may include a first mold portion 212 pressing one side of the base material 290 and a first protrusion 230 pressing the other side of the base material 290, and may form a first notching (e.g., a first notching 172 of FIG. 5) on the base material 290 using a second mold portion 211 supporting the base material 290. For example, the first pressing process 310 may form the first notching 172 by relatively reciprocating the second mold portion 211 with respect to the first mold portion 212 and the base material 290.

According to an embodiment (e.g., FIG. 15), the second pressing device 220 may perform a second pressing process 320. The second pressing process 320 may form a second notching (e.g., the second notching 173 of FIG. 5) on the base material 290. The second pressing device 220 may include a third mold portion 222 and a fourth mold portion 221. The third mold portion 222 may press one side of the base material 290. The fourth mold portion 221 may press the other side of the base material 290. The third mold portion 222 may include a second protrusion 240 configured to press one side of the base material 290. The fourth mold portion 221 may include a third protrusion 250 configured to press the other side of the base material 290. The fourth mold portion 221 may support the base material 290. While the fourth mold portion 221 supports one side of the base material 290, the third mold portion 222 may provide pressure to the other side of the base material 290. For example, the fourth mold portion 221 may include a fourth pressing surface 221a facing the lower surface 290a of the base material 290, and the third mold portion 222 may include a third pressing surface 222a facing the upper surface 290b of the base material 290.

The second pressing process 320 may form a second notching (e.g., the second notching 173 of FIG. 5) on the base material 290 by using the second pressing device 220. For example, the second pressing process 320 may form a second notching (e.g., the second notching 173 of FIG. 5) on the base material 290 by using a third mold portion 222 including a second protrusion 240 pressing one side of the base material 290 and a fourth mold portion 221 including a third protrusion 250 pressing the other side of the base material 290. For example, in the second pressing process 320, the fourth mold portion 221 may be disposed such that the third protrusion 250 faces the first notching 172. The second pressing process 320 may form the second notching 173 by relatively reciprocating the second protrusion 240 with respect to the fourth mold portion 221 and the base material 290.

The third mold portion 222 may include the second protrusion portion 240 protruding from the third pressing surface 222a. The fourth mold portion 221 may include the third protrusion portion 250 protruding from the fourth pressing surface 221a. The second pressing device 220 may form a second notching 292 corresponding to a shape of the second protrusion portion 240, on the base material 290. In an embodiment, the third mold portion 222 may be referred to as a second upper mold portion, and the fourth mold portion 221 may be referred to as a second lower mold portion. Descriptions of the lower mold portion 201 and the upper mold portion 202 may be applied to the fourth mold portion 221 and the third mold portion 222, respectively.

The device 200 for manufacturing the battery cell may form the cap plate 170 including the first venting portion 171. For example, the base material 290 may be manufactured as the cap plate 170 including the first venting portion 171 by the first pressing device 210 and the second pressing device 220.

The protrusion portions 230, 240, and 250 of the device 200 for manufacturing the battery cell may have a shape for forming a thickness of the venting portion (e.g., the first venting portion 171). Since the first venting portion 171 may be formed to have a substantially uniform thickness, reliability of the battery cell (e.g., the battery cell 100 of FIG. 1) may be improved. For example, the first venting portion 171 may be ruptured when an inner portion of the battery cell 100 is at a specified pressure. For example, a first width W1 of the first protrusion 230 may be greater than a third width W3 of the third protrusion 250. Since the first width W1 of the first protrusion 230 may be formed to be greater than the third width W3 of the third protrusion 250, interference between the fourth mold portion 221 and the base material 290 and damage (e.g., scratching) of the base material 290 due to the third protrusion 250 may be prevented. When the base material 290 moves from the first pressing device 210 to the second pressing device 220, a center point of the base material 290 may move. Since the first width W1 of the first protrusion 230 may be formed to be greater than the third width W3 of the third protrusion 250, even when the center point of the base material 290 moves, the base material 290 may be formed to have a venting portion (e.g., the first venting portion 171) having a uniform thickness.

A second width W2 of the second protrusion 240 may be equal to or less than the third width W3 of the third protrusion 250. Since the second width W2 of the second protrusion 240 may be formed to be less than the third width W3 of the third protrusion 250, a load applied to the pressing devices 210 and 220 may be reduced. Since the second width W2 of the second protrusion 240 may be formed to be less than the third width W3 of the third protrusion 250, a width A1 of a first notching (e.g., the first notching 172 of FIG. 5) may be formed to be greater than a width A2 of a second notching (e.g., the second notching 173 of FIG. 5).

A second height H2 of the second protrusion 240 may be formed within 50% of a thickness of the base material 290. Since the second height H2 of the second protrusion 240 may be formed within 50% of the thickness of the base material 290, a load of the base material 290 and/or the pressing devices 210 and 220 generated in the second pressing process 320 may be reduced.

The second height H2 of the second protrusion 240 may be higher than a first height H1 of the first protrusion 230 or a third height H3 of the third protrusion 250. Since the second height H2 may be higher than the first height H1 or the third height H3, a defect of the first venting portion 171 may be reduced. For example, since the third height H3 of the third protrusion 250 of the fourth mold portion 221 supporting the base material 290 may be formed to be equal to or shorter than the second height H2 of the third mold portion 222 configured to reciprocate, a degree of freedom in expressing a shape of the device 200 for manufacturing the battery cell may be increased.

According to an embodiment (e.g., FIG. 16), the device 200 for manufacturing the battery cell may further include a stopper member 260. The stopper member 260 may be located between the third mold portion 222 and the fourth mold portion 221. The stopper member 260 may separate the third mold portion 222 from the fourth mold portion 221. For example, in an embodiment, the stopper member 260 may be mounted on the third mold portion 222, and may be in contact with the fourth mold portion 221 based on movement of the third mold portion 222. Since the stopper member 260 may be in contact with the third mold portion 222 and the fourth mold portion 221, the first venting portion 171 of the cap plate 170 may have a thickness with a specified size. In another embodiment, the stopper member 260 may be mounted on the fourth mold portion 221, and may be in contact with the third mold portion 222 based on movement of the third mold portion 222.

The descriptions above are merely an example of applying the principle of the present disclosure, and other configurations may be further included without departing from the scope of the present disclosure.

Although the embodiment of the present disclosure has been described above, the scope of the present disclosure is not limited thereto, and it will be apparent to those of ordinary skill in the art that various modifications and modifications may be possible without departing from the technical idea of the present disclosure described in the claims. For example, the present disclosure may be implemented by deleting some components in the above-described embodiment, and each of the embodiments may be implemented in combination with each other.

According to an embodiment of the present disclosure, reliability of a battery cell may be improved. For example, a thickness of a venting portion may be formed substantially uniformly.

Only specific examples of implementations of certain embodiments may be described. Variations, improvements and enhancements of the disclosed embodiments and other embodiments may be made based on the disclosure of this patent document.

The present disclosure also relates to the following aspects.

Aspect 1) A device for manufacturing a battery cell, comprising: a first pressing device including a first mold portion configured to press one side of a base material, and a second mold portion including a first protrusion configured to press the other side of the base material and configured to support the base material; and a second pressing device including a third mold portion including a second protrusion configured to press the one side of the base material, and a fourth mold portion including a third protrusion configured to press the other side of the base material, and configured to support the base material, wherein a first width of the first protrusion is greater than a third width of the third protrusion.

Aspect 2) In aspect 1, wherein a second width of the second protrusion is equal to or less than the third width of the third protrusion.

Aspect 3) In aspect 1 or 2, further including a stopper member located between the third mold portion and the fourth mold portion and configured to separate the third mold portion and the fourth mold portion.

Aspect 4) In any one of aspects 1 to 3, wherein a second height of the second protrusion is within 50% of a thickness of the base material.

Aspect 5) In aspect any one of 1 to 4, wherein a second height of the second protrusion is higher than a first height of the first protrusion or a third height of the third protrusion.

Aspect 6) A method for manufacturing a battery cell, comprising: a first pressing process of forming a first notching on the other side of a base material by using a first mold portion pressing one side of the base material and a second mold portion including a first protrusion pressing the other side of the base material and supporting the base material; and a second pressing process of forming a second notching on the one side of the base material by using a third mold portion including a second protrusion pressing the one side of the base material, and a fourth mold portion including a third protrusion pressing the other side of the base material, wherein a first width of the first protrusion is greater than a third width of the third protrusion.

Aspect 7) In aspect 6, having one or more of the following characteristics (i) to (ii), respectively alone or in combination: (i) a second width of the second protrusion is equal to or less than the third width of the third protrusion, and/or (ii) a second height of the second protrusion is higher than a first height of the first protrusion or a third height of the third protrusion.

Aspect 8) In aspect 6 or 7, wherein the first pressing process forms the first notching by relatively reciprocating the second mold portion with regard to the first mold portion and the base material.

Aspect 9) In any one of aspects 6 to 8, wherein the second pressing process dispose the third protrusion to face the first notching, and the second pressing process forms the second notching by relatively reciprocating the second protrusion with regard to the fourth mold portion and the base material.

Aspect 10) A battery cell comprising: an electrode assembly; a can in which the electrode assembly is accommodated; and a cap plate sealing an opening of the can and including a first venting portion formed to be ruptured when a pressure in the can is equal to or greater than a preset value, wherein the cap plate includes a first surface, and a second surface opposite to the first surface, the first venting portion is located between a first notching formed in the first surface and a second notching formed in the second surface, and a maximum width of the first notching is different from a maximum width of the second notching.

Aspect 11) In aspect 10, wherein a height of the first notching is equal to or less than a height of the second notching.

Aspect 12) In aspect 10 or 11, having one or more of the following characteristics (i) to (iv), respectively alone or in combination: (i) the second notching has a groove including a cross-section of any one of a V shape, a tetragonal shape, a U shape, or a semicircular shape, (ii) a central axis of the first notching is offset from a central axis of the second notching, (iii) at least one of the first notching or the second notching is a groove including a cross-section of an asymmetric structure, and/or (iv) at least one of the first notching or the second notching includes a coating layer on an inner surface thereof.

Aspect 13) In any one of aspects 10 to 12, wherein the cap plate includes a plurality of first venting portions, and wherein the plurality of first venting portions are formed to be spaced apart from each other.

Aspect 14) In any one of aspects 10 to 13, wherein the can includes a bottom portion including a second venting portion formed to be rupturable when the pressure in the can is equal to or greater than the preset value, and a wall portion extended from the bottom portion, the bottom portion includes a third surface and a fourth surface opposite to the third surface, and the second venting portion is located between a third notching formed in the third surface and a fourth notching formed in the fourth surface.

Aspect 15) In aspect 14, having one or more of the following characteristics (i) to (ii), respectively alone or in combination: (i) a width of the third notching is different from a width of the fourth notching, and/or (ii) a height of the third notching is equal to or less than a height of the fourth notching.

## Claims

1. A device for manufacturing a battery cell, comprising:
a first pressing device including a first mold portion configured to press one side of a base material, and a second mold portion including a first protrusion configured to press the other side of the base material and configured to support the base material; and
a second pressing device including a third mold portion including a second protrusion configured to press the one side of the base material, and a fourth mold portion including a third protrusion configured to press the other side of the base material, and configured to support the base material,
wherein a first width of the first protrusion is greater than a third width of the third protrusion.

2. The device of claim 1, wherein a second width of the second protrusion is equal to or less than the third width of the third protrusion.

3. The device of claim 1 or 2, further including a stopper member located between the third mold portion and the fourth mold portion and configured to separate the third mold portion and the fourth mold portion.

4. The device of any one of claims 1 to 3, wherein a second height of the second protrusion is within 50% of a thickness of the base material.

5. The device of claim any one of 1 to 4, wherein a second height of the second protrusion is higher than a first height of the first protrusion or a third height of the third protrusion.

6. A method for manufacturing a battery cell, comprising:
a first pressing process of forming a first notching on the other side of a base material by using a first mold portion pressing one side of the base material and a second mold portion including a first protrusion pressing the other side of the base material and supporting the base material; and
a second pressing process of forming a second notching on the one side of the base material by using a third mold portion including a second protrusion pressing the one side of the base material, and a fourth mold portion including a third protrusion pressing the other side of the base material,
wherein a first width of the first protrusion is greater than a third width of the third protrusion.

7. The method of claim 6, having one or more of the following characteristics (i) to (ii), respectively alone or in combination:
(i) a second width of the second protrusion is equal to or less than the third width of the third protrusion, and/or
(ii) a second height of the second protrusion is higher than a first height of the first protrusion or a third height of the third protrusion.

8. The method of claim 6 or 7, wherein the first pressing process forms the first notching by relatively reciprocating the second mold portion with regard to the first mold portion and the base material.

9. The method of any one of claims 6 to 8, wherein the second pressing process dispose the third protrusion to face the first notching, and
the second pressing process forms the second notching by relatively reciprocating the second protrusion with regard to the fourth mold portion and the base material.

10. A battery cell comprising:
an electrode assembly;
a can in which the electrode assembly is accommodated; and
a cap plate sealing an opening of the can and including a first venting portion formed to be ruptured when a pressure in the can is equal to or greater than a preset value,
wherein the cap plate includes a first surface, and a second surface opposite to the first surface,
the first venting portion is located between a first notching formed in the first surface and a second notching formed in the second surface, and
a maximum width of the first notching is different from a maximum width of the second notching.

11. The battery cell of claim 10, wherein a height of the first notching is equal to or less than a height of the second notching.

12. The battery cell of claim 10 or 11, having one or more of the following characteristics (i) to (iv), respectively alone or in combination:
(i) the second notching has a groove including a cross-section of any one of a V shape, a tetragonal shape, a U shape, or a semicircular shape,
(ii) a central axis of the first notching is offset from a central axis of the second notching,
(iii) at least one of the first notching or the second notching is a groove including a cross-section of an asymmetric structure, and/or
(iv) at least one of the first notching or the second notching includes a coating layer on an inner surface thereof.

13. The battery cell of any one of claims 10 to 12, wherein the cap plate includes a plurality of first venting portions, and
wherein the plurality of first venting portions are formed to be spaced apart from each other.

14. The battery cell of any one of claims 10 to 13, wherein the can includes a bottom portion including a second venting portion formed to be rupturable when the pressure in the can is equal to or greater than the preset value, and a wall portion extended from the bottom portion,
the bottom portion includes a third surface and a fourth surface opposite to the third surface, and
the second venting portion is located between a third notching formed in the third surface and a fourth notching formed in the fourth surface.

15. The battery cell of claim 14, having one or more of the following characteristics (i) to (ii), respectively alone or in combination:
(i) a width of the third notching is different from a width of the fourth notching, and/or
(ii) a height of the third notching is equal to or less than a height of the fourth notching.
